# EUROPÄISCHE PATENTSCHRIFT

(11) **EP 1 265 406 B1**
(45) Veröffentlichungstag und Bekanntmachung des Hinweises auf die Patenterteilung: **17.08.2005**
(21) Anmeldenummer: 02012612.4
(22) Anmeldetag: 06.06.2002
(51) Int. Cl.: H04L 12/46, H04L 29/06, H04L 29/08

(54) **WAP-Telefonbuch für virtuelle private Netzwerke**
WAP telephone directory for virtual private networks
Annuaire téléphonique WAP pour des réseaux privés virtuels

(30) Priorität: 06.06.2001 DE 10127301
(43) Veröffentlichungstag der Anmeldung: 11.12.2002
(73) Patentinhaber: Vodafone Holding GmbH, 40213 Düsseldorf (DE)
(72) Erfinder: Schläfer, Philipp, 40223 Düsseldorf (DE)
(74) Vertreter: Weisse, Jürgen, Dipl.-Phys.

(56) Entgegenhaltungen:
- WO-A-00/76172
- WO-A-99/56431
- US-A- 6 061 346

## Beschreibung

### Technisches Gebiet

Die Erfindung betrifft ein Verfahren zum Einbuchen und Zugreifen auf ein virtuelles privates Netzwerk (VPN) über ein Mobilfunkendgerät in einem Mobilfunknetzwerk, wobei das virtuelle private Netzwerk als Kommunikationsnetzwerk eines Unternehmens ausgebildet ist und eine Identifikationskennung des Mobilfunkendgeräts in einem Netzwerkfilter des virtuellen privaten Netzwerks gespeichert ist, der die Berechtigung des Zugangs auf das virtuelle private Netzwerk durch das Mobilfunkendgerät überprüft und nur im Fall der Berechtigung den Zugang zum virtuellen privaten Netzwerk zuläßt, wobei eine Anbindung des Mobilfunkendgeräts an eine virtuelle Plattform des virtuellen privaten Netzwerks erfolgt, die bereits definierte Inhalte enthält, welche unmittelbar durch das Mobilfunkendgerät abgerufen werden können.

### Beschreibung

Für mehrere Telefone, bzw. andere Festnetzgeräte wurde früher jeweils eine eigene Kommunikationsleitung benötigt. Dies ist insbesondere bei großen Unternehmen technisch aufwendig und überflüssig, da in der Regel nicht alle Leitungen gleichzeitig genutzt werden. Um zunächst die Anzahl der gebührenpflichtigen Kommunikationsleitungen zu reduzieren, wurden daher sogenannte Telekommunikationsanlagen, auch "TK-Anlage" genannt, entwickelt.

Die Telekommunikationsanlage verfügt über wenigstens eine Kommunikationszentrale und eine geeignete Anzahl an Nebenstellen. So eine Telekommunikationsanlage bildet ein eigenes Kommunikationsnetz, von dem aus beispielsweise von einer Nebenstelle über eine Zentrale des Kommunikationsnetzes zu einem anderen Kommunikationspartner Kontakt aufgenommen werden kann. Die Kommunikationszentrale kann gegebenenfalls auch als Vermittlungsstelle ausgebildet sein.

Durch solche TK-Anlagen werden nach außen erheblich weniger kostenpflichtige Kommunikationsleitungen benötigt, da die Kommunikation oft innerhalb eines Netzwerkes nur zwischen den Nebenstellen stattfindet. Dieses interne Kommunikationsnetz verursacht nur wenig Kosten, da im Normalfall die Kommunikation zwischen den Nebenstellen gebührenfrei ist. Es fallen nur noch Gebühren bei der Wahl eines Kommunikationspartners außerhalb der TK-Anlage an. TK-Anlagen eignen sich daher für größere Unternehmen.

Solche TK-Anlagen sind mittlerweile intelligent ausgebildete, meist Computergestützte Geräte, welche u.a. über ein Telefonbuch mit einem Kurzwahlverzeichnis oder sonstige Inhalte verfügen, um die Kommunikation innerhalb des Kommunikationsnetzes und nach außen für den Benutzer zu erleichtern. Sie haben ferner den Vorteil, daß für bestimmte Nebenstellen die Rechte beschränkt werden können. Das heißt, daß beispielsweise eine bestimmte Nebenstelle nur innerhalb des internen Kommunikationsnetzes kommunizieren kann oder beispielsweise nur festgelegte Nummern verwenden kann. Es gibt für die Art der Beschränkungen zahlreiche Beispiele, die jedoch an dieser Stelle nicht alle aufgezählt werden sollen.

In solchen internen Kommunikationsnetzen ist oft ein virtuelles privates Netzwerk (VPN) installiert. Es ist bekannt, daß die virtuellen privaten Netzwerke als Intranet ausgebildet sind. Intranet ist ein Netzwerkkonzept mit privaten Netzwerkverbindungen, auf denen unternehmensweit Text -, Grafik- und Videodaten ausgetauscht werden. In vielen Fällen verbinden diese Intranets Niederlassungen und Geschäftsstellen von Unternehmen global und bilden somit eine effiziente und kostengünstige Alternative für die unternehmensinterne Kommunikation. Die Schnelligkeit in der Bereitstellung aller relevanter Informationen für Mitarbeiter und Lieferanten, die einfache und kostengünstige Installation, die stabile Protokollwelt für die unterschiedlichsten Dienste, sowie die Integration der verschiedenen Betriebssystem-Plattformen sind wesentliche Vorteile eines Intranets. In dem Intranet können Seiten mit Inhalten abgelegt werden, die mit einem Rechner und der geeigneten Software (z.B. Browser) abgerufen werden können, sofern sie an dem Kommunikationsnetz angebunden sind. Die Inhalte der Seiten liegen oft aufgrund seines hohen Verbreitungsgrades durch das Internet im HTML- bzw. der Weiterentwicklung XHTML-Standard vor (HTML = Hypertext Markup Language). Im Gegensatz zum Internet sind die Seiten des Intranets nicht für jedermann zugänglich, da es sich hierbei um ein unternehmensinternes Netzwerk handelt. Nur Berechtigte haben Zugriff auf dieses Intranet. Auch innerhalb dieses Intranets können Rechte vergeben werden, z.B. wer auf welche Seiten mit welchen Inhalten zugreifen darf.

Es ist bekannt, mit einem Mobilfunkendgerät auf ein Netzwerk eines Unternehmens zuzugreifen. Diese Kommunikationsnetzwerke bezeichnet man auch als "virtuelle private Netzwerke" (VPN). Die Mobilfunkendgeräte können auf diese Weise wie Nebenstellen der TK-Anlage genutzt werden. Der Zugriff auf das virtuelle private Netzwerk erfolgt über den Netzwerkanbieter für das Mobilfunknetz, der diesen Service zur Verfügung stellt. Der Netzwerkanbieter überprüft die Teilnehmernummer (MSISDN) des Mobilfunkendgerätes auf seine Berechtigung. Wenn nun ein Unternehmen den Kundenservice eines Netzwerkanbieters in Anspruch nimmt, wird er in das virtuelle private Netzwerk geleitet. Diejenigen Teilnehmernummern, die beim Kundenservice hinterlegt sind, sind berechtigt, auf eine Plattform des virtuellen Netzwerkes zuzugreifen. Nachteil bei diesem Verfahren zum Einbuchen und Zugreifen auf das virtuelle private Netzwerk ist, daß der Vorgang hierfür sehr lange dauert. Es müssen zudem Teilnehmernummern beim Netzwerkbetreiber bzw. dessen Kundenservice hinterlegt werden, um diesen Teilnehmern zu gestatten auf das VPN zuzugreifen. Beim Kundenservice werden auch die Berechtigungsprofile für die Teilnehmer hinterlegt. Durch dieses Verfahren kann auch die Kurzwahl für die Nebenstellen der TK-Anlage aus einem Kurzwahlverzeichnis ab- und aufgerufen werden.

Der Zugriff auf das VPN erfolgt letztendlich über die WAP-Schnittstelle (= Wireless Application Protocol) des Mobilfunkendgeräts. Das Intranet stellt daher gemäß diesem Standard geeignete Seiten in diesem Format zur Verfügung, damit das Mobilfunkendgerät als Nebenstelle darauf zugreifen kann.

Die Zugriffsgeschwindigkeit auf die interne Plattform eines VPN ist bei bekannten Verfahren jedoch wegen der Überprüfungsprozedur durch den Kundenservice extrem langsam.

Das US-Patent Nr. 606 1 346 offenbart ein privates IP-Netzwerk. Dieses private IP-Netzwerk ist mit einem kabellosen Netz, wie beispielsweise einem Funknetz, verbunden. Eine Kommunikationsstation, die aus einem tragbaren Computer und einem mobilen GSM-Terminal besteht, kann nach einer Authentifizierungs- und Identifizierungsprozedur über das kabellose Netzwerk auf das private IP-Netzwerk zugreifen. Das kabellose Netzwerk ist dazu an das private Netzwerk gekoppelt. Der Zugriff auf ein Telefonbuch über WAP wird nicht beschrieben.

### Offenbarung der Erfindung

Aufgabe der Erfindung ist es daher, ein Verfahren zu schaffen, bei dem die Geschwindigkeit für das Einbuchen und Zugreifen auf ein virtuelles privates Netzwerk mit einem Mobilfunkendgerät gegenüber derzeitigen Verfahren erhöht wird, um schnell Nummern von bestimmten Teilnehmern im Unternehmen zu erhalten.

Erfindungsgemäß wird die Aufgabe dadurch gelöst, daß bei einem Verfahren zum Einbuchen und Zugreifen auf ein virtuelles privates Netzwerk (VPN) der eingangs genannten Art der Zugriff auf das virtuelle private Netzwerk über eine WAP-Schnittstelle des Mobilfunkendgeräts erfolgt und die auf der Plattform definierten Inhalte ein Telefonbuch enthalten, welches ein Kurzwahlverzeichnis aufweist und eine hierarchische Bereichsauswahl enthält, wobei es ausreicht, die Anfangszeichen einer Kurzwahl einzugeben, um in einen auszuwählenden Bereich zu gelangen.

Der Geschwindigkeitszuwachs für den Zugriff auf das VPN ergibt sich dadurch, daß nunmehr die Überprüfung des Zugangs auf das VPN über einen Netzwerkfilter erfolgt. Der Netzwerkfilter ist Bestandteil des virtuellen privaten Netzwerks. Eine Überprüfung ist durch den Mobilfunknetzwerkbetreiber nun nicht mehr erforderlich. Zugriffe auf das virtuelle private Netzwerk werden nunmehr durch bereits vordefinierte Inhalte, welche auf einer virtuellen Plattform des VPN vorliegen, beschleunigt. Die Inhalte müssen so nicht jedesmal neu definiert werden.

Dabei verfügt das Telefonbuch über eine hierarchische Bereichsauswahl, wobei es ausreicht, die Anfangszeichen einer Kurzwahl einzugeben, um in einen auszuwählenden Bereich zu gelangen. Oft wird nur nach der Kurzwahl oder bestimmten Personen einer Abteilung eines Unternehmens gesucht. Durch eine hierarchische Struktur können so lediglich durch Eingabe des ersten Kurzwahlzeichens schon Personen einer bestimmten Abteilung gefunden und angewählt werden. Vorteilhafterweise werden immer mehrere Kurzwahlen zur Auswahl vorgeschlagen werden.

Als Vorteil erweist sich zudem, dass die auf der virtuellen Plattform definierten Inhalte ein Telefonbuch enthalten. Dieses unternehmensinterne Telefonbuch ist somit auch von einem Mobilfunkendgerät aus nutzbar. Dieses Telefonbuch weist ein Kurzwahlverzeichnis auf. Die Kurzwahlen sind somit nun auch von dem Mobilfunkendgerät nutzbar.

In einer vorteilhaften Ausgestaltung des erfindungsgemäßen Verfahrens sind die definierten Inhalte als eine eigene Intranetseite ausgebildet. Durch dieses Verfahren läßt sich auf bewährte Strukturen der Netzwerkkonzeption zurückgreifen, was die Kosten für das neue Verfahren erheblich senkt.

Zuweilen kann es zum Vertippen der gewünschten Kurzwahl kommen. Es ist somit eine vorteihafte Ausgestaltung der Erfindung, wenn die Kurzwahlen mit "Fuzzy Logic" ermittelt werden, welche dem Nutzer vorgeschlagen werden.

Insbesondere für Unternehmen ist es vorteilhaft, wenn der Zugang zum virtuellen Netzwerk, je nach Status eines Benutzers, wenigstens eine Beschränkung für die Nutzung der Inhalte des virtuellen privaten Netzwerks aufweist. Die Beschränkung kann beispielsweise von räumlicher oder zeitlicher Natur sein. Außerdem können Beschränkungen bezüglich der zur Verfügung stehenden Nummern und Kurzwahlen vorgesehen sein.

In einer vorteilhaften Ausgestaltung der Erfindung können die definierten Inhalte Programmfunktionen enthalten. Diese Programmfunktionen können dazu vorgesehen sein, bestimmte Funktionen beim Mobilfunkendgerät und/oder im virtuellen privaten Netzwerk auszulösen. Durch diese Maßnahme kann beispielsweise das Mobilfunkendgerät als Nebenstelle aus dem virtuellen privaten Netzwerk heraus gesteuert werden.

Als vorteilhafte Ausbildung des erfindungsgemäßen Verfahren ergibt sich, wenn die auf der Plattform definierten Inhalte auch für Festnetzgeräte abrufbar sind. Damit stehen die Inhalte der virtuelle Plattform, insbesondere die dort definierten Kurzwahlen, auch allen Festnetzteilnehmern zur Verfügung. Vorteilhafterweise lassen sich diese Inhalte dann auch über das Intranet abrufen.

Weitere Vorteile des erfindungsgemäßen Verfahrens ergeben sich aus dem Gegenstand der Unteransprüche und anhand des nachfolgend erläuterten Ausführungsbeispiels.

### Kurze Beschreibung der Zeichnung

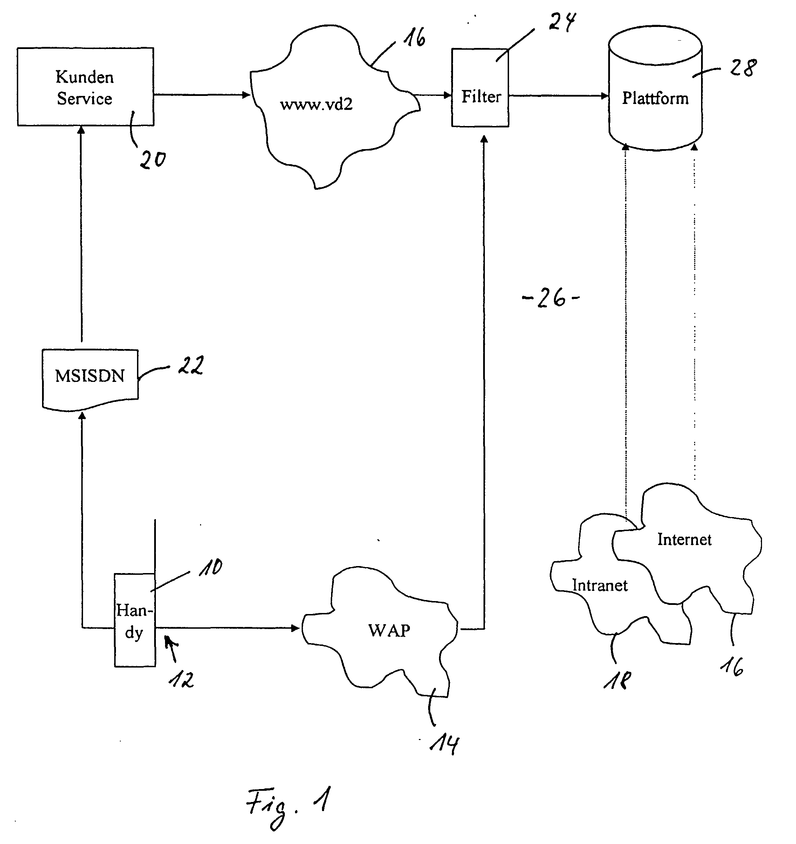

Fig. 1 stellt eine Prinzipskizze dar, wie der Zugriff auf ein virtuelles privates Netzwerk (VPN), insbesondere nach dem erfindungsgemäßen Verfahren, erfolgt.

### Beschreibung eines Ausführungsbeispiels

In Fig. 1 wird mit 10 ein Mobilfunkendgerät bezeichnet. Das Mobilfunkendgerät 10 verfügt über eine WAP-Schnittstelle 12. WAP ist die englische Bezeichnung für "Wireless Application Protocol". Dies ist ein Standard, der es Mobilfunkendgeräten ermöglicht auf das Internet zuzugreifen. Das Internet muß dafür gesonderte WAP-Seiten bereitstellen, damit das Mobilfunkendgerät 10 darauf zugreifen kann und wird im Folgenden daher mit WAP 14 benannt. Das Mobilfunkendgerät muß ferner die Fähigkeit besitzen, solche WAP-Seiten zu lesen und darstellen zu können.

Bisher konnte ein Mobilfunkendgerät nur auf das Internet 16 bzw. Intranet 18 über einen Kundenservice 20 eines Mobilfunknetzbetreibers zugreifen. Das Mobilfunkendgerät 10 buchte sich mit seiner Teilnehmerkennung 22 zur Identifikation (MSISDN) in das Mobilfunknetz des Mobilfunknetzbetreibers 20 ein. Der Kundenservice des Mobilfunknetzbetreibers 20 leitet bei einer entsprechenden Berechtigung das Mobilfunkendgerät 10 über das Internet 16 auf einen Netzwerkfilter 24 eines virtuellen privaten Netzwerkes 26. Das virtuelle private Netzwerk 26 wird aus einem Festnetz und einem Mobilfunknetz gebildet. Es enthält eine nicht dargestellte computergesteuerte TK-Anlage, welche die Kommunikationsabläufe steuert.

Der Netzwerkfilter 24 überprüft nochmals die Berechtigung des Teilnehmers für den Zugang zum virtuellen privaten Netzwerk 26. Passiert der Teilnehmer diesen Netzwerkfilter 24 hat er insbesondere Zugriff auf das Intranet 18.

Die Erfindung beruht jedoch insbesondere darauf einen überflüssigen Überprüfungsmechanismus zu vermeiden. Der Teilnehmer greift daher unmittelbar über die WAP-Schnittstelle auf den Netzwerkfilter 24 zu. Dadurch entfällt die zeitraubende Überprüfung der Teilnehmerkennung durch den Netzwerbetreiber 20. Von dem Netzwerkilter 24, welcher ebenfalls eine Identifikationskennung abfragt, gelangt der Teilnehmer über das WAP 14 auf eine virtuelle Plattform 28. Die Identikationskennungen der mobilen Teilnehmer sind dazu in dem Netzwerkfilter 24 des virtuellen privaten Netzwerkes 26 gespeichert und werden mit der Identifikationsanfrage durch das Mobilfunkendgerät 10, welches dazu seine Identifikationskennung sendet, miteinander verglichen. Nach Passieren des Netzwerkfilters 24 werden dem Mobilfunkendgerät 10 Benutzerrechte zugeordnet. In dieser Plattform 28 sind Inhalte, wie Kurzwahlen vordefiniert abgelegt, so daß auch hier ein unmittelbarer Zugriff auf das virtuelle private Netzwerk erfolgen kann.

Durch diese Maßnahme gelangt der Teilnehmer mit seinem Mobilfunkendgerät unmittelbar in das virtuelle Netzwerk seines Unternehmens mit einem erhöhten Geschwindigkeitszuwachs beim Einbuchen und beim Zugriff auf Inhalte. Der Teilnehmer kann, sofern auf der Plattform 28 als Inhalte ein Kurzwahlverzeichnis abgespeichert ist, die Kurzwahlen zu Verbindung nutzen. Um den geeigneten Kommunikationspartner zu finden, wird er durch eine hierarchische Struktur sowie eine "Fuzzy Logic" unterstützt. Es können dann auch Vorschläge aus dem Kurzwahlverzeichnis angezeigt werden, die durch den Teilnehmer nicht immer ganz richtig geschrieben sind. Der Teilnehmer kann auch, je nach seinem Status, in den Kurzwahlen, die er verwenden darf beschränkt werden. So kann vermieden werden, daß beispielsweise andere Gespräche als Ortsgespräche stattfinden. Oder ein Teilnehmer kann nur in oder zu bestimmten Abteilungen telefonieren.

## Patentansprüche

1. Verfahren zum Einbuchen und Zugreifen auf ein virtuelles privates Netzwerk über ein Mobilfunkendgerät (10) in einem Mobilfunknetzwerk, wobei das virtuelle private Netzwerk als Kommunikationsnetzwerk eines Unternehmens ausgebildet ist und eine Identifikationskennung des Mobilfunkendgeräts (10) in einem Netzwerkfilter (24) des virtuellen privaten Netzwerks (26) gespeichert ist, der die Berechtigung des Zugangs auf das virtuelle private Netzwerk (24) durch das Mobilfunkendgerät (10) überprüft und nur im Fall der Berechtigung den Zugang zum virtuellen privaten Netzwerk (26) zuläßt, wobei eine Anbindung des Mobilfunkendgeräts (10) an eine virtuelle Plattform (28) des virtuellen privaten Netzwerks (26) erfolgt, die bereits definierte Inhalte enthält, welche unmittelbar durch das Mobilfunkendgerät (10) abgerufen werden können, **dadurch gekennzeichnet, dass** der Zugriff auf das virtuelle private Netzwerk über eine WAP-Schnittstelle (12) des Mobilfunkendgeräts (10) erfolgt und die auf der Plattform (28) definierten Inhalte ein Telefonbuch enthalten, welches ein Kurzwahlverzeichnis aufweist und eine hierarchische Bereichsauswahl enthält, wobei es ausreicht, die Anfangszeichen einer Kurzwahl einzugeben, um in einen auszuwählenden Bereich zu gelangen.

2. Verfahren zum Einbuchen und Zugreifen auf ein virtuelles privates Netzwerk nach Anspruch 1, **dadurch gekennzeichnet, daß** die definierten Inhalte als eine eigene Intrarietseite einer Struktur einer Netzwerkkonzeption ausgebildet sind.

3. Verfahren zum Einbuchen und Zugreifen auf ein virtuelles privates Netzwerk nach einem der Ansprüche 1 bis 2, **dadurch gekennzeichnet, daß** mehrere Kurzwahlen vorgeschlagen werden.

4. Verfahren zum Einbuchen und Zugreifen auf ein virtuelles privates Netzwerk nach Anspruch 3, **dadurch gekennzeichnet, daß** die Kurzwahlen mit "Fuzzy Logic" ermittelt werden.

5. Verfahren zum Einbuchen und Zugreifen auf ein virtuelles privates Netzwerk nach einem der Ansprüche 1 bis 4, **dadurch gekennzeichnet, daß** für den Zugang zum virtuellen Netzwerk (26), je nach Status eines Benutzers, wenigstens eine Beschränkung für die Nutzung der Inhalte des virtuellen privaten Netzwerks (26) vorgesehen sein kann.

6. Verfahren zum Einbuchen und Zugreifen auf ein virtuelles privates Netzwerk nach einem der Ansprüche 1 bis 5, **dadurch gekennzeichnet, daß** die definierten Inhalte Programmfunktionen enthalten, die bestimmte Funktionen beim Mobilfunkendgerät und/oder im virtuellen privaten Netzwerk (26) auslösen können.

7. Verfahren zum Einbuchen und Zugreifen auf ein virtuelles privates Netzwerk nach einem der Ansprüche 1 bis 6, **dadurch gekennzeichnet, daß** die auf der Plattform (28) definierten Inhalte auch für Festnetzgeräte abrufbar sind.

8. Verfahren zum Einbuchen und Zugreifen auf ein virtuelles privates Netzwerk nach Anspruch 7, **dadurch gekennzeichnet, daß** die auf der Plattform (28) definierten Inhalte über das Inter- oder Intranet abrufbar sind.

## Claims

1. Method of logging in into and accessing a virtual private network through a mobile station (10), the virtual private network being provided as communication network of a business establishment, and an identifying information of the mobile station (10) is stored in a network filter (24) of the virtual private network (26), which filter verifies the authorization of the mobile station (10) to access the virtual private network (24) and only in the case of authorization permits access to the virtual private network (26), whereby the mobile station (10) is connected to a virtual platform (28) of the virtual private network, which platform already contains pre-defined contents which can be directly retrieved by the mobile station, **characterised in that** the access to the virtual private network is effected through a WAP-interface (12) of the mobile station (10) and the contents defined on the platform (28) comprise a telephone book which has an abbreviated dialling table and a hierarchic area selection, entering the initial characters of a abbreviated dialling being sufficient to get into a selected area.

2. Method of logging-in into and accessing a virtual private network according to claim 1, **characterized in that** the defined contents are designed as an intranet page of its own of a structure of a network conception.

3. Method of logging-in into and accessing a virtual private network according to any one of the claims 1 to 2, **characterised in that** a plurality of abbreviated dialling systems are proposed.

4. Method of logging-in into and accessing a virtual private network according to claim 3, **characterized in that** the abbreviated dialling systems are determined by "fuzzy logic".

5. Method of logging-in into and accessing a virtual private network according to any one of the claims 1 to 4, **characterised in that** at least one restriction of the access to the virtual network (26) with respect to the use of the contents of the virtual network (26) depending on the status of a user can be provided.

6. Method of logging-in into and accessing a virtual private network according to any one of the claims 1 to 5, **characterised in that** the defined contents comprises program functions which are able to trigger certain functions in the mobile station and/or in the virtual private network (26).

7. Method of logging-in into and accessing a virtual private network according to any one of the claims 1 to 6, **characterised in that** the contents defined on the platform (28) can also be retrieved by apparatuses of conventional telephone networks.

8. Method of logging-in into and accessing a virtual private network according to claim 7, **characterized in that** the contents defined on the platform (28) can be retrieved by internet or intranet.

## Revendications

1. Procédé pour l'enregistrement et l'accès à un réseau privé virtuel par l'intermédiaire d'un terminal de téléphonie mobile (10) à l'intérieur d'un réseau de téléphonie mobile, le réseau privé virtuel étant réalisé sous forme de réseau de communication d'entreprise et un code d'identification du terminal de téléphonie mobile (10) étant mémorisé dans un filtre de réseau (24) du réseau privé virtuel (26) qui vérifie que le terminal de téléphonie mobile (10) est autorisé à accéder au réseau privé virtuel (24) et ne permet l'accès au réseau privé virtuel (26) qu'en cas d'autorisation, ceci étant suivi par le rattachement du terminal de téléphonie mobile (10) à une plate-forme virtuelle (28) du réseau privé virtuel (26) qui contient des contenus déjà définis pouvant être appelés directement par le terminal de téléphonie mobile (10), **caractérisé en ce que** l'accès au réseau privé virtuel s'effectue par l'intermédiaire d'une interface WAP (12) du terminal de téléphonie mobile (10) et les contenus définis sur la plate-forme (28) comprennent un annuaire présentant une liste de numéros abrégés et comprenant une sélection hiérarchique des zones, en entrant tout simplement les premiers caractères d'un numéro abrégé afin d'accéder à une zone devant être sélectionnée.

2. Procédé pour l'enregistrement et l'accès à un réseau privé virtuel selon la revendication 1, **caractérisé en ce que** les contenus définis sont réalisés sous forme de page Intranet propre à une structure d'une conception de réseau.

3. Procédé pour l'enregistrement et l'accès à un réseau privé virtuel selon l'une quelconque des revendications 1 à 2, **caractérisé en ce que** plusieurs numéros abrégés sont proposés.

4. Procédé pour l'enregistrement et l'accès à un réseau privé virtuel selon la revendication 3, **caractérisé en ce que** les numéros abrégés sont déterminés par « logique floue ».

5. Procédé pour l'enregistrement et l'accès à un réseau privé virtuel selon l'une quelconque des revendications 1 à 4, **caractérisé en ce qu'**au moins une limitation pour l'utilisation des contenus du réseau privé virtuel (26) peut être prévue pour l'accès au réseau virtuel (26) en fonction du statut de chacun des utilisateurs.

6. Procédé pour l'enregistrement et l'accès à un réseau privé virtuel selon l'une quelconque des revendications 1 à 5, **caractérisé en ce que** les contenus définis comprennent des fonctions de programme qui peuvent déclencher certaines fonctions dans le terminal de téléphonie mobile et/ou dans le réseau privé virtuel (26).

7. Procédé pour l'enregistrement et l'accès à un réseau privé virtuel selon l'une quelconque des revendications 1 à 6, **caractérisé en ce que** les contenus définis sur la plate-forme (28) peuvent être appelés également pour les appareils de téléphonie fixe.

8. Procédé pour l'enregistrement et l'accès à un réseau privé virtuel selon la revendication 7, **caractérisé en ce que** les contenus définis sur la plate-forme (28) peuvent être appelés par le biais d'Internet ou d'Intranet.
